# EUROPEAN PATENT APPLICATION

(11) **EP 3 376 451 A1**
(43) Date of publication of application: **19.09.2018**
(21) Application number: 18159939.0
(22) Date of filing: 05.03.2018
(51) Int. Cl.: G06Q 10/08, G06Q 10/00

(54) **DECISION AID SYSTEM FOR REMOTELY CONTROLLED/PARTIALLY AUTONOMOUS VESSELS**

(30) Priority: 13.03.2017 GB 201703967
(71) Applicant: Rolls-Royce plc, London SW1E 6AT (GB)
(72) Inventor: Rachmawati, Lily, Derby, Derbyshire DE24 8BJ (GB)
(74) Representative: Rolls-Royce plc

(57) **Abstract**

A decision aid system for a vessel belonging to a plurality of vessels in data communication with a remotely located control hub comprises: associated with each of the plurality of vessels, a sub-system comprising one or more sensors for monitoring the local environment of the vessel, a node processor for processing data collected by the one or more sensors and a data storage device; and a controller located remotely from the node processors and in two-way data communication with each of the node processors. Each data storage device maintains an historic record of vessel states recorded by the one or more sensors, corresponding control actions taken in response to those vessel states and the ensuing vessel states resulting from those control actions. Each node processor is configured to evaluate computational models and/or simulations to predict possible future states from a subset of the historic record and select an appropriate control action to achieve a desired ensuing vessel state resulting from the selected control action. In making a decision on an appropriate action, the system first interrogates historic data stored in the vessel's database for a previously successful decision. If there is no record of a previously successful decision, simulations or computational models based on stored data are used to try to determine actions which will result in an acceptable outcome. Only when an appropriate action cannot be determined using onboard data, the system communicates the vessels predicament to a control hub which is able to communicate a recommended action to the vessel.

## Description

The present invention relates to control of a plurality of unmanned vessels, for example (but without limitation) a fleet of ships. More particularly the invention concerns management of the sharing of data between the unmanned vessels and a control hub.

It is known to monitor and control the activities of multiple vessels from a single control hub. Data is collected through sensors and on board processors provided on individual vessels and uploaded to the control hub. A controller, which may be a human operated controller or a suitably programmed computer system, assesses the received data and is able to communicate operating instructions back to individual vessels. This may include the sharing of data collected by a first vessel with one or more other vessels in the collective control of the controller.

It will be appreciated that large quantities of collected data may be transferred between on board systems and the control hub in such data networks. The speed at which time sensitive data may be communicated can be impacted upon by the quantity of data. The speed at which time sensitive data may be communicated is also impacted by the network bandwidth and how many parties are sharing it, and also availability of connection. In some areas, there is no available connection to satellite or communications towers.

The present invention seeks to enable a network which transmits time sensitive data more efficiently than in prior known systems resulting in the unmanned vessels responding more quickly to identified risks.

In accordance with the present invention there is provided a decision aid system for a vessel belonging to a plurality of vessels in data communication with a remotely located control hub, the system comprising;
associated with each of the plurality of vessels, a sub-system comprising one or more sensors for monitoring the local environment of the vessel, a node processor for processing data collected by the one or more sensors and a data storage device; and
a controller located remotely from the node processors and in two-way data communication with each of the node processors;
wherein,
each data storage device maintains an historic record including: vessel states recorded by the one or more sensors, corresponding control actions taken in response to those vessel states and the ensuing vessel states resulting from those control actions,
each node processor is configured to evaluate computational models and/or simulations to predict possible future states from a subset of the historic record and select an appropriate control action to achieve a desired ensuing vessel state resulting from the selected control action, and wherein,
for a given recorded vessel state the processor performs the following steps;
   a) analyses the historic record and determines if the recorded vessel state correlates to an ensuing state recorded by the historic record;
   b) where the recorded vessel state does not correlate to an ensuing state recorded by the historic record, determine whether the recorded vessel state is predictable based on a subset of the historic record;
   c) if the recorded vessel state is determined to be a predictable vessel state, select an appropriate control action to achieve a desired ensuing state resulting from the selected control action;
   d) if the recorded vessel state is determined to be an unpredictable vessel state, communicate the unpredictable vessel state to the remotely located control hub.

Step d) may include a sub-step of, prior to communicating the unpredictable vessel state to the remotely controlled hub, extrapolating from the unpredictable vessel state to predict a future state and assessing the potential impact of the predicted future state, associating a risk factor with the potential impact and only communicating the unpredictable vessel state if the risk factor exceeds a predetermined maximum acceptable risk factor.

Where a potential impact is assessed and a risk factor exceeds the predetermined maximum acceptable risk factor, data indicating the risk factor and optionally the nature of the potential impact may be communicated to the control hub along with the unpredictable vessel state.

The control hub may include a master database of all data communicated between the hub and each of the plurality of vessels. Data in the master database may be interrogated to determine an appropriate corrective action. The control hub may include a control hub processor configured to evaluate computational models and/or simulations to determine appropriate corrective actions.

On receipt of the unpredictable vessel state communicated to the control hub, a human operator interfacing with the control hub is able to assess the vessel's situation, determine an appropriate corrective action and communicate the appropriate corrective action back to the vessel.

In determining the appropriate corrective action, the operator may communicate with other vessels, for example, other vessels' stored data may be interrogated to identify an effective solution.

Once the appropriate corrective action has been determined, the control hub may communicate an update to one or more of the plurality of vessels. Thus, all vessels can be taught from the experiences of any one vessel. Such communication may be made en bloc or on an as needed basis to individual vessels in the plurality of vessels.

It will be appreciated that with the passage of time, the knowledge base within each vessel's data storage device and processor is increased and the vessel is able to adapt to an increasing number of situations without the need to contact the control hub and seek human operator intervention.

By reducing the amount of data communicated between nodes and the control hub, essential communications relating to unpredictable and potentially high risk events can be exchanged at greater speed allowing remotely controlled vessels to be able to respond more quickly in a newly encountered situation.

For example, the vessels comprise a fleet of unmanned marine vehicles at sea and the control hub is located in a manned on shore facility. In other examples, the vessels may comprise a plurality of road-based vehicles each subscribing to a common navigation service, or unmanned aerial drones monitored by a control centre.

An embodiment of the invention will now be described by way of example with reference to the accompanying drawings in which:
Figure 1 shows an embodiment of a control system in accordance with the invention;
Figure 2 illustrates the flow of information taken in steps of a method used to enable a control system in accordance with an embodiment of the invention.

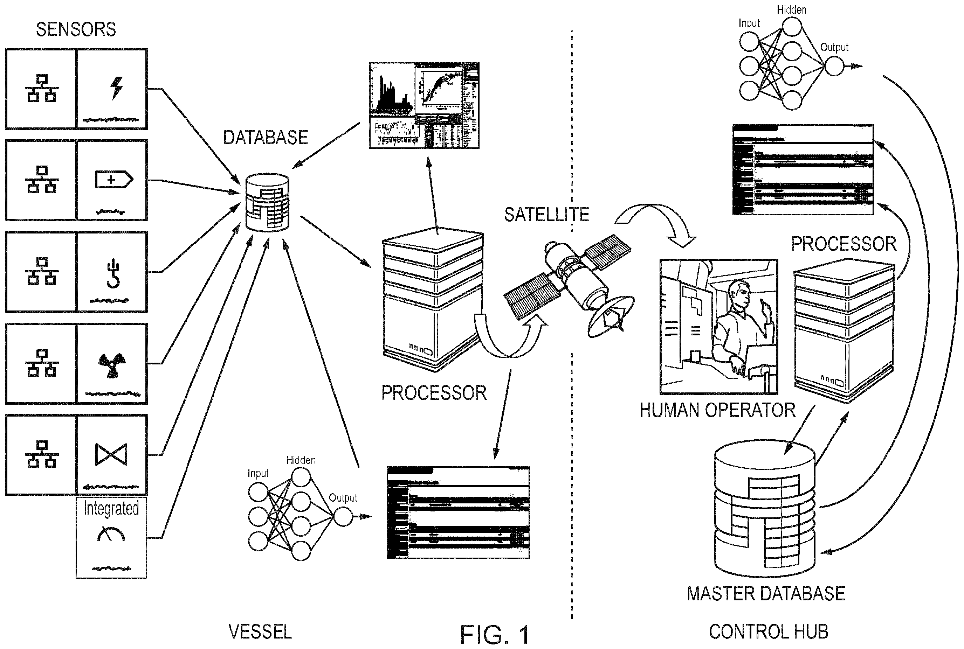

As can be seen in Figure 1 a vessel has a plurality of sensors communicating monitored data to a database. The directions of data transmission are represented by the arrows. The database maintains a historic record of vessel states detected by the sensors of the vessel.

A processor is configured to interrogate data contained in the database and perform statistical analysis thereon. The processor is further configured to perform simulations based on the historic data and statistical analysis thereon whereby to predict expected outcomes resulting from the historic record. It will be appreciated that such a configuration also permits a reverse analysis of a recorded vessel state to determine whether any given vessel state is "normal" based on previous experience and a current situation. Where the recorded data deviates from "normal" the process performs further analysis to predict a likely future outcome and identify an appropriate risk factor associated with that outcome. The risk factor can be compared against a predetermined maximum acceptable risk factor.

The processor is additionally in data communication with a control hub via a satellite. Where a risk factor is identified as exceeding the predetermined maximum acceptable risk factor, a communication is sent to the control hub. For example, the communication includes data identifying the vessel, a current recorded vessel state, a predicted future state and a risk factor associated with the predicted future state.

On receipt of the communication from the vessel, a human operator interfacing with the control hub is able to analyze the vessel's predicament. Such analysis may involve the interrogation of a master database accessible by a control hub processor. The master database may contain a historic record of vessel states recorded for a plurality of vessels, any of which might have encountered the communicated predicament. If another vessel has previously taken successful corrective action in the same predicament, this will have been recorded in the master database; this corrective action can then confidently be communicated to the communicating vessel.

If there is no historic record of the vessel's predicament having been successfully resolved by another vessel, the operator may initiate simulations of the outcome of various alternative actions and identify the action most likely to resolve the predicament safely. Once the preferred action is identified, this can be communicated back to the vessel which can then take the corrective action.

The vessel state which results from the corrective action may be recorded in the vessel database and communicated back to the control hub for storage in the master database. Since the control hub is in communication with multiple vessels, each vessel can be given the benefit of each other vessel's experiences by communicating these through the control hub.

In contrast to other data sharing systems, the configuration of the system of the invention is such as to filter the amount of data exchanged between a vessel and the control hub such that data is only communicated on an as needed basis. Since the data communicated between the hub and each vessel is minimized, the bit rate at which the data is communicated is optimized, thus the vessel is able to receive instruction and take corrective action more quickly than might be possible with prior known data sharing systems.

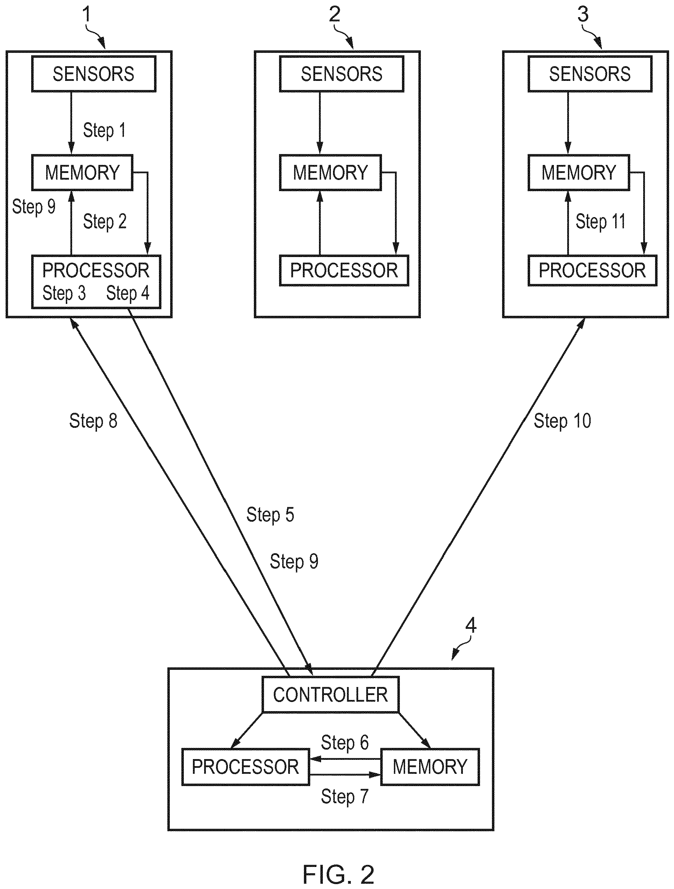

Figure 2 illustrates a method performed by a system in accordance with an embodiment of the invention. Each step of the method involves the collection, analysis, transmission and/or receipt of data. The arrows illustrate flow of data between nodes in the system. The system comprises three vessels, 1, 2, 3 each in data communication with a control hub 4 but not in direct data communication with each other.

Each vessel has a sub-system made up of one or more sensors which monitor one or more states in the vessels environment. Vessel states may include various sorts of data. For example (but without limitation) vessel state data may include performance data of one or more components of the vessel, such as engine operating parameters. In another example (again, without limitation) vessel state data may include environmental data such as the detection of an unexpected obstacle in the vessel's planned route. In Step 1 of the method, the vessel data collected by the on board sensors is stored in the vessel's on board memory. Each vessel also has an on board processor which is able to access and interrogate the collected vessel data.

In Step 2, the on board processor analyses the collected vessel data for normalcy by comparing the current vessel state with previously experienced states already recorded in the database in similar circumstances. If there is no match with any historic record, then in Step 3, retrospective models or simulations may be performed or models generated based on recently collected data to determine if the current vessel state is as would have been predicted. If the current vessel state is determined to be not as would have been predicted, then in Step 4, the processor may perform a forward projecting model or simulation to determine a future vessel state likely to result from the current vessel state. For significant vessel states which are indicative of a potential risk situation, a risk factor is pre-calculated. For example, the database may contain a table of these significant vessel states and their pre-calculated risk factors. Where the forward projecting model or simulation determines a future vessel state with an unacceptably high associated risk factor, then in Step 5 this information is communicated to the control hub. On the contrary, if the risk factor is acceptable, no such communication will be initiated.

The control hub includes its own processor and a master database. The master database maintains a historic record of all interactions between the control hub and each of the three vessels. After a communication is received by the control hub in Step 5, the control hub processor interrogates the master database to determine if another vessel has successfully resolved the same situation (Step 6). If there is no previously recorded successful resolution, then in Step 7 the processor performs forward projecting models or simulations based on one or more potential corrective actions to determine that which is expected to result in the most desirable future vessel state. Once an acceptable corrective action is identified, this is communicated to the vessel 1 along with an indicator of the expected future vessel state (Step 8). The recommended corrective action and resulting outcome are stored in the vessel database (Step 9) and the outcome simultaneously communicated back to the control hub and stored in the master database.

Subsequent to the described event, vessel 3 experiences an identical event for the first time and communicates this to the control hub. The control hub is able to identify the previous occurrence and successful corrective action stored in the master database. The appropriate corrective action is communicated to the vessel 3 in Step 10. It will be noted that vessel 2 does not receive any communication at this time since it has either a) already encountered the event and has a record of the appropriate corrective action in its on board database for future re-occurrences, or, b) has yet to experience the event and has no current need for the data. Both vessel 1 and vessel 3 are now well placed to react to a second occurrence of the event without resort to the control hub.

It will be appreciated that in the embodiments as described the scope, granularity and bit rate of data communicated between individual vessels and the control hub are based on information content, predictability and impact.

The process performed by a system in accordance with an embodiment of the invention can be summarized as follows:
On vessel:
   - Aggregate data at appropriate granularity and scope ("Information" & "Normalcy" driven):
   - Determine data rate based on criticality ("Potential Impact" driven)
   - (Optionally) automatically match with the primary and backup communications media (e.g. L, Ka band satellite, VHF, 4G, wimax) by correlating the capacity, reliability and latency of the media with the INP

In more detail, method steps performed on the vessel involve:
For each sensor data, at equipment, subsystem, and system levels:
   Analyze "Information" content (I): is there "news" in the data?
      Measure information content:
      - Check for similarity to past states in same mode/mission.
      - Allow for system/sensor noise causing apparent difference.
   Check for "Normalcy" (N): does vessel behave as expected?
      Measure normalcy:
      - Assess predictability of current data from recent past: simulation /models
      - Look for shift/change in correlation patterns at subsystem and system level
   Assess for "Potential impact" (P): is there a need for external intervention?
      Measure impact:
      - Predict future behavior with simulation and/or data-driven model
      - Compute KPI (safety, efficiency) & potential for improvement based on mission/operation stage
   At the remote control hub:
      - Monitoring: maintain an updated database and simulation/models
      - Intervention: human operator input in abnormal and/or critical states
      - Baselining and comparison with sister vessels/fleet

Expected benefits to be gained from using the method include a reduction in data handling costs, a focus on important data and an improved and faster decision making process. In the case of a fleet of marine vessels, this can be achieved by:
a. Employing resources (i.e. expert human crew/engineer) at a shore-based control center efficiently, that is, only for non-mundane situations that cannot be handled safely by looking to the history (of the vessel and its sister vessels).
b. Incrementally "teaching" the vessel to operate autonomously over-time, initially with frequent direct intervention from shore and gradually to lean on the vessel's continuously developing historical data bank and computational models as the data bank and models are enriched.
c. Sharing lessons learned between sister vessels in the fleet.

When an unmanned vessel temporarily loses connectivity, the semi-autonomy learned by the vessel from its historical data, historical commands given by the control hub and its own simulation capability will allow the unmanned vessel to continue operation in a more intelligent fashion.

It will be understood that the invention is not limited to the embodiments above-described and various modifications and improvements can be made without departing from the concepts described herein. For example, the different embodiments may take the form of an entirely hardware embodiment, an entirely software embodiment, or an embodiment containing both hardware and software elements.

Except where mutually exclusive, any of the features may be employed separately or in combination with any other features and the disclosure extends to and includes all combinations and sub-combinations of one or more features described herein.

## Claims

1. A control system for a vessel belonging to a plurality of vessels (1,2,3) in data communication with a remotely located control hub (4), the system comprising;
associated with each of the plurality of vessels (1,2,3), a sub-system comprising one or more sensors for monitoring the local environment of the vessel, a node processor for processing data collected by the one or more sensors and a data storage device; and
a controller located remotely from the node processors and in two-way data communication with each of the node processors;
wherein,
each data storage device maintains an historic record including: vessel states recorded by the one or more sensors, corresponding control actions taken in response to those vessel states and the ensuing vessel states resulting from those control actions,
each node processor is configured to evaluate computational models and/or simulations to predict possible future states from a subset of the historic record and select an appropriate control action to achieve a desired ensuing vessel state resulting from the selected control action, and wherein,
for a given recorded vessel state the processor performs the following steps;
a) analyses the historic record and determines if the recorded vessel state correlates to an ensuing state recorded by the historic record;
b) where the recorded vessel state does not correlate to an ensuing state recorded by the historic record, determine whether the recorded vessel state is predictable based on a subset of the historic record;
c) if the recorded vessel state is determined to be a predictable vessel state, select an appropriate control action to achieve a desired ensuing state resulting from the selected control action;
d) if the recorded vessel state is determined to be an unpredictable vessel state, communicate the unpredictable vessel state to the remotely located control hub.

2. A control system as claimed in claim 1 wherein Step d) includes a sub-step of, prior to communicating the unpredictable vessel state to the remotely controlled hub,
extrapolating from the unpredictable vessel state to predict a future state,
assessing the potential impact of the predicted future state,
associating a risk factor with the potential impact, and
only communicating the unpredictable vessel state if the risk factor exceeds a predetermined maximum acceptable risk factor.

3. A control system as claimed in claim 2 wherein, where a potential impact is assessed and a risk factor exceeds the predetermined maximum acceptable risk factor, data indicating the risk factor and the nature of the potential impact is communicated to the control hub along with the unpredictable vessel state.

4. A control system as claimed in any preceding claim wherein the control hub (4) includes a master database of all data communicated between the hub and each of the plurality of vessels.

5. A control system as claimed in claim 5 wherein data in the master database is interrogated to determine if there is a record of a previous occurrence with which is associated a successful corrective action.

6. A control system as claimed in any preceding claim wherein the control hub (4) includes a control hub processor configured to perform modelling or simulation tasks to determine appropriate corrective actions for newly encountered vessel data.

7. A control system as claimed in any preceding claim wherein the control hub (4) includes an interface accessible by a human operator.

8. A method for controlling data in a vessel sub-system of a control system as claimed in any preceding claim comprising:
receiving current vessel state data sent from one or more sensors,
storing the current vessel state data in an interrogatable database,
compare the current vessel state data for correlation with previously stored vessel state data,
perform a retrospective model or simulation on the current vessel state data and determine if the current vessel state is as would have been predicted within expected error margins,
perform a forward projecting model or simulation to determine a future vessel state likely to result from the current vessel state,
associate a risk factor value with the determined future vessel state and compare the associated risk factor with a pre-determined maximum risk factor value,
where the determined risk factor exceeds the pre-determined maximum risk factor value, communicate the current vessel state data, determined future vessel data and associated risk factor, to the control hub (4),
receiving communication containing a determined corrective action from the control hub,
performing the corrective action,
saving the corrective action to the interrogatable database along with a resulting vessel state which results from the corrective action, and
communicating the resulting vessel state to the control hub (4).

9. A method for controlling data in a control hub (4) of control system as claimed in any of claims 1 to 7 comprising:
receiving a communication from a vessel (1,2,3) sub-system of the plurality of vessels (1,2,3) comprising current vessel state data, determined future vessel data and associated risk factor,
interrogating the master database for correlation with previously stored vessel state data from any of the plurality of vessels,
performing a forward projecting model or simulation to determine a future vessel state likely to result from one or more corrective actions,
determining the corrective action which is expected to result in the most desirable future vessel state,
communicating the determined corrective action to the vessel sub-system,
receiving a communication from the vessel sub-system containing the resulting vessel state resulting from the corrective action,
storing the current vessel state data, determined corrective action and resulting vessel state in the master database.

10. A method as claimed in claim 9 further comprising;
receiving from a second vessel sub-system of the plurality of vessels (1,2,3), a communication containing identical current vessel state data, determined future vessel data and associated risk factor,
interrogating the master database and identifying a correlation with the previously stored current vessel state data, determined corrective action and resulting vessel state, transmitting the determined corrective action to the second sub-system.

11. A control system as claimed in any of claims 1 to 7 wherein each vessel sub-system is located in an unmanned marine vessel (1,2,3) located at sea and the control hub (4) is located on land.

12. A computer configured to perform the method of Claim 8.

13. A computer configured to perform the method of claim 9 or claim 10

14. A computer readable medium containing a computer program which, when installed on a computer enables the computer to perform the method of claim 8.

15. A computer readable medium containing a computer program which, when installed on a computer enables the computer to perform the method of claim 9 or claim 10.
